# EUROPEAN PATENT APPLICATION

(11) **EP 4 810 182 A1**
(43) Date of publication of application: **23.09.2026**
(21) Application number: 24891348.5
(22) Date of filing: 08.11.2024
(51) Int. Cl.: B23B 51/00, B23B 51/02

(54) **DRILL**

(30) Priority: 15.11.2023 JP 2023194618
(71) Applicant: Mitsubishi Materials Corporation, Tokyo 100-8117 (JP)
(72) Inventor: FUJISAWA, Shoichi, Tokyo 100-8117 (JP); KIMURA, Tomoki, Tokyo 100-8117 (JP); USUI, Masahiro, Tokyo 100-8117 (JP); KOSEKI, Yuma, Tokyo 100-8117 (JP); TANAKA, Hibiki, Tokyo 100-8117 (JP)
(74) Representative: Hoffmann Eitle
(86) International application number: PCT/JP2024/039847
(87) International publication number: WO 2025/105312

(57) **Abstract**

In a drill of the present invention, a thinning edge, a main cutting edge, and a leading edge each have honing (H) of which a cross section perpendicular to each of ridge portions has a convex curve shape, in the cross section, in both end portions (h1), (h2) of the honing H, a surface connected to a first end portion (h1) is defined as a first surface (101), a surface connected to a second end portion (h2) is defined as a second surface (102), a distance from an intersection P between an extension line of the first surface (101) and an extension line of the second surface (102) to the first end portion h1 is defined as a first width dimension (L1), a distance from the intersection P to the second end portion h2 is defined as a second width dimension (L2), [L1/L2] is defined as a width ratio, the thinning edge and the main cutting edge each have the first surface (101) that is a rake face and the second surface (102) that is a flank face, and the width ratio of the thinning edge is larger than the width ratio of a radially outer end portion connected to an outer peripheral corner in the main cutting edge.

## Description

### TECHNICAL FIELD

The present invention relates to a drill.

Priority is claimed on Japanese Patent Application No. 2023-194618, filed November 15, 2023, the content of which is incorporated herein by reference.

### BACKGROUND ART

**In** the related art, there is known a drill including a chip discharging flute, a rake face disposed in the chip discharging flute and facing a drill rotation direction, a flank face disposed on a drill tip surface, a cutting edge disposed on a ridge portion at which the rake face and the flank face are connected to each other, a margin disposed on a drill outer peripheral surface and extending along the chip discharging flute, a leading edge disposed on a ridge portion at which the margin and the rake face are connected to each other, an outer peripheral corner disposed on a corner portion at which the cutting edge and the leading edge are connected to each other, and a shoulder portion disposed on a ridge portion at which the margin and the flank face are connected to each other and extending from the outer peripheral corner in a direction opposite to the drill rotation direction (counter drill rotation direction).

For example, in the drills described in Patent Documents 1 and 2, as cutting conditions tend to be made more severe in order to increase machining efficiency, in order to suppress a problem in which a defect is likely to occur in a shoulder portion particularly in the case of drilling a thin plate, a honing width of each of a shoulder cutting edge portion (shoulder portion), a margin cutting edge portion (leading edge), and a boundary (outer peripheral corner) between the shoulder cutting edge portion and the margin cutting edge portion is set to be larger than a honing width of a second cutting edge portion (main cutting edge).

### Citation List

### Patent Documents

Patent Document 1: Japanese Patent No. 6722410
Patent Document 2: Japanese Patent No. 7268691

### SUMMARY OF INVENTION

### Technical Problem

The drills described in Patent Documents 1 and 2 are advantageous in high-efficiency machining or machining in an unstable state due to thinning and miniaturization of a workpiece (work material), but have the following problems in low-to-medium efficiency machining conditions, which are still the mainstream of drilling (main machining region), or in machining of a large workpiece. The term "low-to-medium efficiency machining conditions" referred to in the present specification refers to, for example, machining conditions up to a cutting speed: vc = 130 m/min, and a feed that depends on a drill blade diameter, but for example, is up to φ6.0 mm and fr = 0.35 mm/rev.

That is, as in Patent Documents 1 and 2, in a case where the honing width in the vicinity of the drill outer peripheral portion is set to be large, cutting resistance increases, and thus wear is likely to progress early. That is, fracturing resistance tends to increase, while wear resistance tends to decrease. In the drilling of a large workpiece under the low-to-medium efficiency processing conditions as described above, sudden chipping is less likely to occur, and it is important to suppress chipping or the like caused by thinning of the cutting edge due to wear progression.

An object of the present invention is to provide a drill capable of increasing wear resistance, thereby achieving a long life of a tool.

### Solution to Problem

In order to solve the above-described problems, the present invention provides the following means.

### [Aspect 1 of Present Invention]

A drill including: a body extending in an axial direction along a center axis, in which the body includes a chip discharging flute open to a tip surface and an outer peripheral surface of the body and extending from the tip surface to a posterior end side, a rake face disposed in the chip discharging flute and facing a drill rotation direction about the center axis, a flank face disposed on the tip surface, a cutting edge disposed at a ridge portion at which the rake face and the flank face are connected to each other, a margin disposed on the outer peripheral surface and extending along the chip discharging flute, a leading edge disposed at a ridge portion at which the margin and the rake face are connected to each other, and an outer peripheral corner disposed at a corner portion in which the cutting edge and the leading edge are connected to each other, the cutting edge includes a thinning edge disposed at a radially inner end portion of the cutting edge, and a main cutting edge disposed on a radially outer side of the thinning edge and connected to the leading edge via the outer peripheral corner, the thinning edge, the main cutting edge, and the leading edge each have honing of which a cross section perpendicular to each of the ridge portions has a convex curve shape, in the cross section, a surface connected to a first end portion of both end portions of the honing is defined as a first surface and a surface connected to a second end portion of both end portions is defined as a second surface, a distance from an intersection between an extension line of the first surface and an extension line of the second surface to the first end portion is defined as a first width dimension L1, a distance from the intersection to the second end portion is defined as a second width dimension L2, and [L1/L2] is defined as a width ratio, the thinning edge and the main cutting edge each have the first surface that is the rake face and the second surface that is the flank face, and the width ratio of the thinning edge is larger than the width ratio of a radially outer end portion of the main cutting edge, the radially outer end portion being connected to the outer peripheral corner.

In the drill of the present invention, each honing of the thinning edge, the main cutting edge, and the leading edge has a convex curve shape (convex R shape) in a cross section perpendicular to each ridge portion, and is a so-called rounded honing. Therefore, in the low-to-medium efficiency machining conditions or the drilling of a large workpiece, wear or adhesion in a honing surface can be suppressed. Specifically, for example, unlike the present invention, in a case where the honing of each component (particularly, the main cutting edge or the like) of the cutting edge is flat surface chamfer honing or the like, in the low-to-medium efficiency machining conditions or the drilling of a large workpiece, crushing wear is promoted in the honing surface, and there is a concern that adhesion or chipping may occur early.

In the drill of the present invention, when the width ratio [L₁/L₂] is defined in a cross section perpendicular to a direction in which each honing extends, the width ratio of the honing of the thinning edge is larger than the width ratio of the honing of the radially outer end portion of the main cutting edge, the radially outer end portion being connected to the outer peripheral corner. In other words, the width ratio of the honing of the radially outer end portion of the main cutting edge is smaller than the width ratio of the honing of the thinning edge.

Specifically, when the width ratios of each honing are compared, in the thinning edge, the proportion of the first width dimension L₁ on the rake face side is increased, and in the radially outer end portion of the main cutting edge, the proportion of the second width dimension L₂ on the flank face side is increased.

During drilling, in the thinning edge, chips that are compressed are rubbed, and thus damage due to crater wear tends to be remarkable. Since the crater wear is likely to occur in the vicinity of a boundary between the honing surface and the rake face, the crater wear can be stably suppressed by increasing the width ratio of the thinning edge (increasing the proportion of the first width dimension L₁ on the rake face side) as in the present invention.

In addition, in the radially outer end portion of the main cutting edge, wear on the flank face side tends to occur remarkably. Therefore, as in the present invention, the flank face wear can be stably suppressed by reducing the width ratio of the radially outer end portion of the main cutting edge (increasing the proportion of the second width dimension L₂ on the flank face side).

As described above, with the drill of the present invention, it is possible to improve the wear resistance, and thus it is possible to achieve a long life of the tool. In particular, the present invention has a remarkably significant effect in the case of being applied to low-to-medium efficiency machining conditions or drilling of a large workpiece.

### [Aspect 2 of Present Invention]

The drill according to Aspect 1, in which the main cutting edge includes a first cutting edge disposed on the radially outer side of the thinning edge and having a concave curve shape recessed in a direction opposite to the drill rotation direction about the center axis, and a second cutting edge disposed on a radially outer side of the first cutting edge and connected to a radially outer end of the first cutting edge, and the second cutting edge constitutes the radially outer end portion of the main cutting edge, the radially outer end portion being connected to the outer peripheral corner.

With the above configuration, in the case of a so-called curved blade shape in which the main cutting edge has a concave blade shape (first cutting edge), the above-described effects of the present invention are achieved.

### [Aspect 3 of Present Invention]

The drill according to Aspect 1, in which the main cutting edge has a linear shape, a drill blade diameter is defined as a diameter dimension of a rotation locus of the cutting edge about the center axis, and a region of the main cutting edge within 7% of the drill blade diameter from the outer peripheral corner toward a radially inner side is defined as the radially outer end portion of the main cutting edge, the radially outer end portion being connected to the outer peripheral corner.

With the above configuration, in the case of a so-called linear blade shape in which the main cutting edge has a linear shape, the above-described effects of the present invention are achieved.

### [Aspect 4 of Present Invention]

The drill according to any one of Aspects 1 to 3, in which the leading edge has the first surface that is the rake face and the second surface that is the margin, and the width ratio at a position within 1.5 mm from the outer peripheral corner toward the posterior end side in the leading edge is 0.7 or more and 1.3 or less.

The leading edge tends to be damaged due to wear on the margin side. In particular, a position within 1.5 mm from the outer peripheral corner toward the posterior end side in the leading edge is located in the tip portion of the leading edge, and is a portion that is likely to receive cutting resistance from the inner peripheral surface of the machined hole of the work material.

As a result of intensive research by the present inventors, it was confirmed that, in a case where the proportion of the second width dimension L2 on the margin side is excessively increased with respect to the width ratio of the honing of the leading edge, the cutting resistance is significantly increased, and the wear progresses at an early stage. **In** addition, in a case where the proportion of the first width dimension L1 on the rake face side is small, the wear on the rake face side progresses.

For the above reason, the width ratio of the leading edge is preferably 0.7 or more and 1.3 or less, and it is more desirable as the width ratio is closer to 1.0.

### [Aspect 5 of Present Invention]

The drill according to any one of Aspects 1 to 4, in which the width ratio of a portion of the main cutting edge located on a radially inner side of the radially outer end portion is larger than the width ratio of the radially outer end portion of the main cutting edge.

In the main cutting edge, a portion that is located on a radially inner side of the radially outer end portion compared to the radially outer end portion that is connected to the outer peripheral corner tends to be more likely to cause crater wear due to abrasion of chips. Since the crater wear is likely to occur in the vicinity of the boundary between the honing surface and the rake face, the width ratio of the honing of the portion of the main cutting edge located on the radially inner side with respect to the radially outer end portion is increased (the proportion of the first width dimension L1 on the rake face side is increased), so that the crater wear can be effectively suppressed.

In addition, in the radially outer end portion of the main cutting edge, the wear on the flank face side tends to progress. Therefore, as in the above configuration, the flank face wear can be effectively suppressed by reducing the width ratio of the honing of the radially outer end portion of the main cutting edge (increasing the proportion of the second width dimension L2 on the flank face side).

### [Aspect 6 of Present Invention]

The drill according to any one of Aspects 1 to 5, in which the width ratio of the thinning edge increases as the thinning edge approaches the center axis in an edge length direction in which the thinning edge extends.

In the thinning edge, the compressed chips are abraded, so that damage due to the crater wear is likely to occur. In particular, the crater wear tends to be more remarkable as the thinning edge approaches the center axis along the edge length direction.

Therefore, as in the above configuration of the present invention, the width ratio of the honing of the thinning edge is increased as the thinning edge approaches the center axis, so that the crater wear can be effectively suppressed over the entire edge length including the vicinity of the center axis of the thinning edge.

### [Aspect 7 of Present Invention]

The drill according to any one of Aspects 1 to 6, in which the width ratio of an outermost end of the main cutting edge located at the outer peripheral corner is the smallest among the width ratios of the cutting edge.

In the outermost end (outer peripheral corner) of the main cutting edge, the wear on the flank face side tends to progress remarkably. Therefore, as in the above configuration of the present invention, the width ratio of the honing of the outermost end (outer peripheral corner) of the main cutting edge is set to the minimum among the entire cutting edges (the main cutting edge and the thinning edge), so that the flank face wear can be effectively suppressed.

### [Aspect 8 of Present Invention]

The drill according to Aspect 2, in which the width ratio of the first cutting edge is maximized at a lowermost point located farthest in a direction opposite to the drill rotation direction in the first cutting edge.

In a drill in the related art, stress due to chip rubbing is strongly applied at a lowermost point of a concave blade shape (first cutting edge in the present invention) having a concave curve shape that is located in a direction opposite to the drill rotation direction, and damage due to crater wear tends to be significant. Since the crater wear is likely to occur in the vicinity of the boundary between the honing surface and the rake face, as in the above configuration of the present invention, the width ratio of the honing at the lowermost point of the first cutting edge is maximized (the proportion of the first width dimension L1 on the rake face side is maximized), so that the crater wear can be effectively suppressed.

### [Aspect 9 of Present Invention]

The drill according to any one of Aspects 1 to 8, in which the body has a shoulder portion disposed at a ridge portion at which the margin and the flank face are connected to each other and extending from the outer peripheral corner in a direction opposite to the drill rotation direction about the center axis, and the shoulder portion has honing of which a cross section perpendicular to the ridge portion has a convex curve shape, and the shoulder portion has the first surface that is the flank face and the second surface that is the margin, and the width ratio of the shoulder portion is 0.7 or more and 1.3 or less.

As in the above configuration, when the width ratio of the honing of the shoulder portion is 0.7 or more and 1.3 or less, a problem in which the wear of any one of the flank face and the margin disposed on both sides of the shoulder portion progresses early and affects the tool life is stably suppressed. The width ratio of the shoulder portion is more preferably close to 1.0.

### [Aspect 10 of Present Invention]

The drill according to any one of Aspects 1 to 9, in which the width ratio of the thinning edge is 1.0 or more.

In this case, the width ratio of the honing of the thinning edge can be stably increased (the proportion of the first width dimension L1 on the rake face side can be increased), and the effect of suppressing the crater wear is more remarkably obtained. Advantageous Effects of Invention

According to the drill of the aspects of the present invention, it is possible to improve wear resistance, and thus it is possible to achieve a long life of a tool.

### BRIEF DESCRIPTION OF DRAWINGS

[FIG. 1] A perspective view showing a part (body) of a drill of the present embodiment in a simplified manner.
[FIG. 2] A front view showing a part of the drill of the present embodiment in a simplified manner.
[FIG. 3] A side view showing a part of the drill of the present embodiment in a simplified manner.
[FIG. 4] A side view showing a part of the drill of the present embodiment in a simplified manner.
[FIG. 5A] A cross-sectional view schematically showing a cross section of the body of the drill perpendicular to each ridge portion (each honing), and specifically showing a case where a width ratio of the honing is 1.0.
[FIG. 5B] A cross-sectional view schematically showing a cross section of the body of the drill perpendicular to each ridge portion (each honing), and specifically showing a case where a width ratio of the honing is larger than 1.0.
[FIG. 5C] A cross-sectional view schematically showing a cross section of the body of the drill perpendicular to each ridge portion (each honing), and specifically showing a case where a width ratio of the honing is smaller than 1.0.
[FIG. 6] A view (table) showing a list of results of the term "wear confirmation test 1" of examples (enlarged images in the vicinity of each cutting edge), shown together with a schematic cross-sectional view in the vicinity of each cutting edge.
[FIG. 7] A view (table) showing a list of results of the term "wear confirmation test 2" of examples (enlarged images in the vicinity of each cutting edge), shown together with a schematic cross-sectional view in the vicinity of each cutting edge.

### DESCRIPTION OF EMBODIMENTS

A drill 10 of an embodiment of the present invention will be described with reference to the drawings.

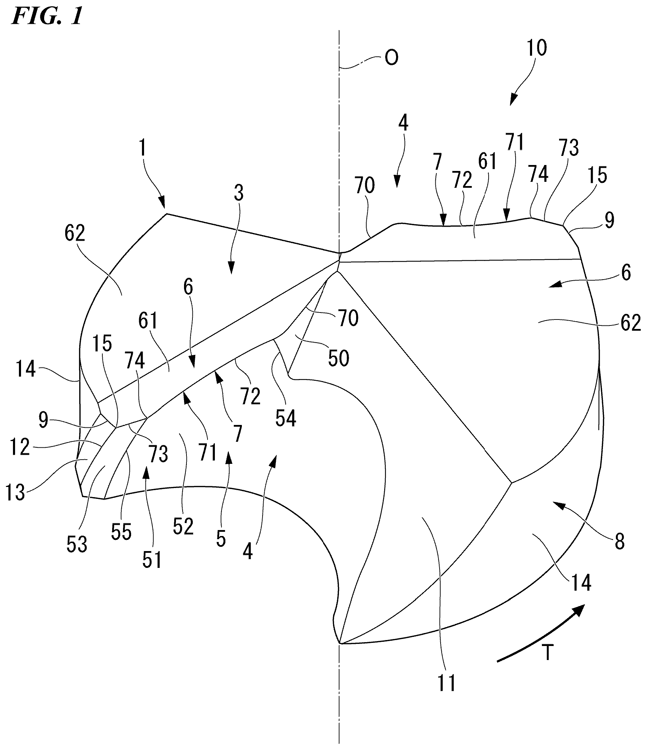

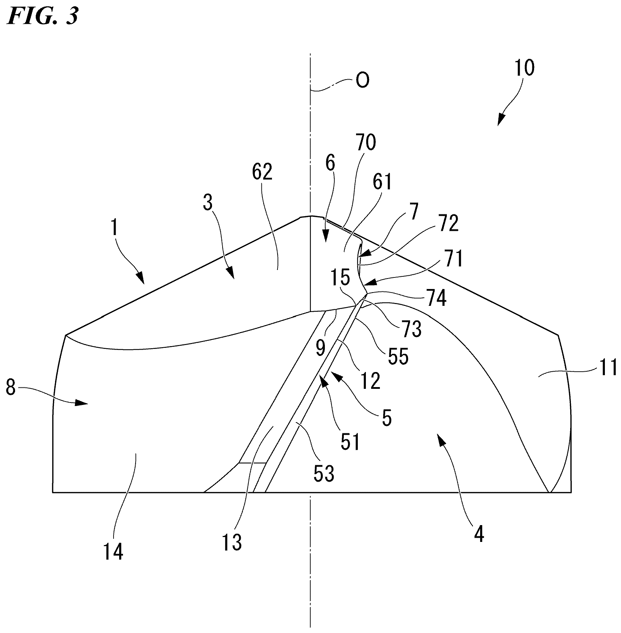

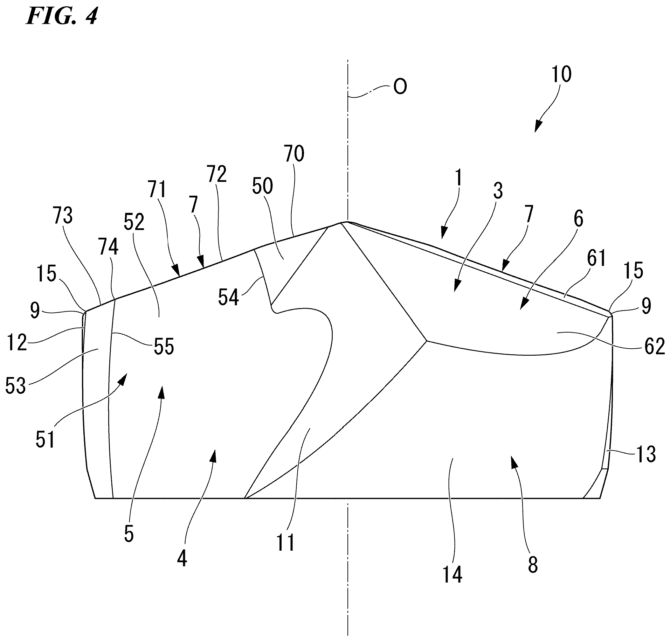

As shown in FIGS. 1 to 4, the drill 10 includes at least a body 1. The body 1 has a substantially columnar shape centered on a center axis O. In the present embodiment, the drill 10 includes the body 1 and a shank (not shown). The body 1 and the shank are disposed side by side in a direction in which the center axis O extends. The body 1 may be referred to as a cutting portion.

In the present embodiment, the body 1 is detachably attached to the shank. That is, the drill 10 is an indexable insert drill. The present invention is not limited thereto, and the drill 10 may include only the body 1 and may not include the shank. In this case, the drill 10 is a drill head. The shank may be referred to as a holder.

In addition, in FIGS. 1 to 4, a fastening mechanism or the like of the body 1 with respect to the shank is not shown, and the body 1 is shown in a simplified manner.

### [Definitions of directions]

In the present embodiment, a direction in which the center axis O of the drill 10 extends is referred to as an axial direction. In the axial direction, a side in a direction from the shank toward the body 1 is referred to as a tip side in the axial direction or simply a tip side, and a side in a direction from the body 1 toward the shank is referred to as a posterior end side in the axial direction or simply a posterior end side.

In addition, a direction orthogonal to the center axis O is referred to as a radial direction. In the radial direction, a direction toward the center axis O is referred to as a radially inner side, and a direction away from the center axis O is referred to as a radially outer side.

A direction around the center axis O is referred to as a circumferential direction. In the circumferential direction, a direction in which the drill 10 is rotated during drilling is referred to as a drill rotation direction T. In addition, in the circumferential direction, a direction opposite to the drill rotation direction T may be referred to as a counter drill rotation direction.

In addition, in the present embodiment, a direction in which each component of a cutting edge 7, which will be described later, of the body 1 extends is referred to as an edge length direction.

### [Shank]

Although not particularly shown, the shank has a columnar shape extending in the axial direction along the center axis O. The shank is detachably held by, for example, a main spindle of a machine tool (not shown), a chuck of a drill press, or the like (hereinafter, abbreviated as a main spindle or the like). The drill 10 is fed to the tip side in the axial direction while the shank is rotated in the drill rotation direction T by the main spindle or the like, and is cut into a work material by the body 1 to perform drilling.

### [Body]

As shown in FIGS. 1 to 4, the body 1 extends in the axial direction along the center axis O. In the present embodiment, a diameter dimension (outer diameter dimension) of the body 1 is, for example, 6 mm or more and 40 mm or less. The diameter dimension of the body 1 corresponds to a diameter dimension of a rotation locus of the cutting edge 7, which will be described later, about the center axis O, and thus may be referred to as a drill blade diameter.

The body 1 includes a tip surface 3 facing the tip side of the body 1, an outer peripheral surface 8 facing the radially outer side of the body 1, a chip discharging flute 4, a rake face 5, a flank face 6, a thinning face 11, a cutting edge 7, a margin 13, a leading edge 12, a body clearance 14, an outer peripheral corner 15, a shoulder portion 9, a fastening mechanism (not shown) for the shank, and a rotational support portion (not shown).

The chip discharging flute 4 is open to the tip surface 3 and the outer peripheral surface 8 of the body 1, and has a flute shape extending from the tip surface 3 to the posterior end side. Specifically, the chip discharging flute 4 is twisted and extends in the counter drill rotation direction as the chip discharging flute 4 extends from the tip surface 3 to the posterior end side in the axial direction. A plurality of the chip discharging flutes 4 are provided on the body 1, each at a distance from the others in the circumferential direction. In the present embodiment, two chip discharging flutes 4 are provided at equal pitches in the circumferential direction.

The rake face 5 is disposed in the chip discharging flute 4 and faces the drill rotation direction T. That is, the rake face 5 is disposed on a wall surface of the chip discharging flute 4 facing the drill rotation direction T.

The rake face 5 includes a thinning rake face 50, a main rake face 51, a first boundary ridge 54, and a second boundary ridge 55.

The thinning rake face 50 is disposed at a radially inner end portion of a tip portion of the chip discharging flute 4. In the present embodiment, the thinning rake face 50 has a substantially triangular shape.

The main rake face 51 is disposed on the radially outer side of the thinning rake face 50.

The main rake face 51 includes a first rake face 52 and a second rake face 53. That is, the rake face 5 includes the first rake face 52 and the second rake face 53.

The first rake face 52 is disposed in a portion of the main rake face 51 other than a radially outer end portion. The first rake face 52 is disposed on the radially outer side of the thinning rake face 50 adjacent to the thinning rake face 50. In the present embodiment, the first rake face 52 has a recessed curved shape. Although not particularly shown, in a cross-sectional view perpendicular to the center axis O (which may hereinafter be simply referred to as a transverse cross-sectional view), the first rake face 52 has a concave curve shape that is recessed in the counter drill rotation direction. A radial dimension of the first rake face 52 is larger than a radial dimension of the thinning rake face 50.

The second rake face 53 is disposed at the radially outer end portion of the main rake face 51. The second rake face 53 is disposed on the radially outer side of the first rake face 52 adjacent to the first rake face 52. In the present embodiment, the second rake face 53 has a twisted surface shape. Although not particularly shown, in the transverse cross-sectional view, the second rake face 53 has a linear shape. However, the present invention is not limited thereto, and the second rake face 53 may have a recessed curved shape. In this case, in the transverse cross-sectional view, the second rake face 53 has a concave curve shape that is recessed in the counter drill rotation direction. Alternatively, the second rake face 53 may have a protruded curved face. In this case, in the transverse cross-sectional view, the second rake face 53 has a convex curve shape that bulges in the drill rotation direction T. The radial dimension of the second rake face 53 is smaller than the radial dimension of the thinning rake face 50 and is smaller than the radial dimension of the first rake face 52.

The second rake face 53 extends substantially in the axial direction along the radially outer side end edge of the wall surface of the chip discharging flute 4 facing the drill rotation direction T. Specifically, the second rake face 53 extends in a twisted manner in the counter drill rotation direction as the second rake face 53 extends toward the posterior end side in the axial direction. The radially outer end portion of the second rake face 53 is connected to the outer peripheral surface 8 via the ridge portion (leading edge 12).

In addition, the second rake face 53 extends in a direction opposite to the drill rotation direction T (that is, the counter drill rotation direction) as the second rake face 53 extends toward the radially outer side. Specifically, the second rake face 53 extends in the counter drill rotation direction as the second rake face 53 extends toward the radially outer side over the entire region of the second rake face 53 in the radial direction. That is, the second rake face 53 has a negative angle as the radial rake over the entire region in the radial direction. Therefore, the ridge portion (leading edge 12) located at the radially outer end of the second rake face 53 has an obtuse angle in the transverse cross-sectional view.

The first boundary ridge 54 extends along the boundary portion where the thinning rake face 50 and the main rake face 51 are connected to each other, and has a ridge shape that is convex in the drill rotation direction T. The first boundary ridge 54 extends substantially in the axial direction along the boundary portion where the thinning rake face 50 and the first rake face 52 are connected to each other. Specifically, the first boundary ridge 54 extends toward the radially inner side as the first boundary ridge 54 extends toward the posterior end side in the axial direction.

The second boundary ridge 55 extends along the boundary portion where the first rake face 52 and the second rake face 53 are connected to each other, and has a ridge shape that is convex in the drill rotation direction T. The second boundary ridge 55 extends substantially in the axial direction along the boundary portion where the first rake face 52 and the second rake face 53 are connected to each other. Specifically, the second boundary ridge 55 extends in the counter drill rotation direction as the second boundary ridge 55 extends toward the posterior end side in the axial direction.

The flank face 6 is disposed on the tip surface 3.

The flank face 6 includes a first flank face 61 and a second flank face 62 that is disposed adjacent to the first flank face 61 in the counter drill rotation direction of the first flank face 61.

The first flank face 61 is disposed at the end portion of the flank face 6 in the drill rotation direction T. The first flank face 61 has an elongated surface shape (a substantially polygonal surface shape that is long in the radial direction) extending substantially in the radial direction. The first flank face 61 extends toward the posterior end side in the axial direction as the first flank face 61 extends in the counter drill rotation direction.

The second flank face 62 is disposed at a portion of the flank face 6 other than the end portion in the drill rotation direction T. The second flank face 62 has substantially a fan shape, and a circumferential dimension increases as the second flank face 62 extends toward the radially outer side. The second flank face 62 extends toward the posterior end side in the axial direction as the second flank face 62 extends in the counter drill rotation direction. An amount of displacement in the axial direction per unit length in the circumferential direction in the second flank face 62 (inclination corresponding to a clearance angle) is larger than the amount of displacement in the first flank face 61.

In the present embodiment, the flank face 6 includes two inclined surfaces (the first flank face 61 and the second flank face 62) having different clearance angles from each other, but the present invention is not limited thereto. The flank face 6 may be formed of, for example, a single inclined surface, or may include three or more inclined surfaces that are disposed side by side in the circumferential direction and have different clearance angles from each other.

The thinning face 11 is disposed on the tip surface 3. The thinning face 11 is disposed adjacent to the flank face 6 in the counter drill rotation direction of the flank face 6. In the present embodiment, the thinning face 11 is connected to the end portion of the second flank face 62 in the counter drill rotation direction. The thinning face 11 extends toward the posterior end side in the axial direction as the thinning face 11 extends in the counter drill rotation direction. An amount of displacement in the axial direction per unit length in the circumferential direction in the thinning face 11 (inclination corresponding to a clearance angle) is larger than the amount of displacement in the flank face 6. In addition, a radially inner end portion of the thinning face 11 is connected to a base portion of the thinning rake face 50 having a triangular shape.

The cutting edge 7 is disposed at a ridge portion where the rake face 5 and the flank face 6 are connected to each other. A plurality of the cutting edges 7 are provided in the body 1, each at a distance from the others in the circumferential direction. In the present embodiment, two cutting edges 7 are provided at equal pitches in the circumferential direction. That is, the drill 10 of the present embodiment is a two-flute twist drill.

The cutting edge 7 includes a thinning edge 70 and a main cutting edge 71.

The thinning edge 70 is disposed at a radially inner end portion of the cutting edge 7. The thinning edge 70 is disposed at a ridge portion where the thinning rake face 50 and the first flank face 61 are connected to each other. That is, the thinning rake face 50 is connected to the thinning edge 70. The thinning edge 70 extends along a distal end edge of the thinning rake face 50. The thinning edge 70 extends substantially in a radial direction from the vicinity of the center axis O toward the radially outer side. In addition, the thinning edge 70 extends toward the posterior end side in the axial direction as the thinning edge 70 extends toward the radially outer side. In the present embodiment, the thinning edge 70 has a substantially linear shape.

The main cutting edge 71 is disposed on the radially outer side of the thinning edge 70. The main cutting edge 71 is connected to the thinning edge 70. The main cutting edge 71 constitutes a portion other than the thinning edge 70 in the cutting edge 7 (a portion other than the radially inner end portion of the cutting edge 7). The main cutting edge 71 is disposed at a ridge portion where the main rake face 51 and the first flank face 61 are connected to each other. That is, the main rake face 51 is connected to the main cutting edge 71. The main cutting edge 71 extends along a distal end edge of the main rake face 51. In addition, the main cutting edge 71 extends toward the posterior end side in the axial direction as the main cutting edge 71 extends toward the radially outer side. The outer peripheral corner 15 is disposed at an outermost end of the main cutting edge 71 in the radial direction. The main cutting edge 71 is connected to the leading edge 12 via the outer peripheral corner 15.

The main cutting edge 71 includes a first cutting edge 72, a second cutting edge 73, and an apex portion 74.

In the present embodiment, the first cutting edge 72 constitutes a portion other than the radially outer end portion of the main cutting edge 71. The first cutting edge 72 is disposed at a ridge portion where the first rake face 52 and the first flank face 61 are connected to each other. That is, the first rake face 52 is connected to the first cutting edge 72. The first cutting edge 72 extends along a distal end edge of the first rake face 52. The first cutting edge 72 is disposed on the radially outer side of the thinning edge 70 and has a concave curve shape that is recessed in a direction opposite to the drill rotation direction T. An end portion of the first cutting edge 72 on the radially inner side is connected to a radially outer end portion of the thinning edge 70. A connecting portion between the first cutting edge 72 and the thinning edge 70 has a convex shape that protrudes in the drill rotation direction T.

In the present embodiment, the second cutting edge 73 constitutes a radially outer end portion of the main cutting edge 71 that is connected to the outer peripheral corner 15. The second cutting edge 73 is disposed at a ridge portion where the second rake face 53 and the first flank face 61 are connected to each other. That is, the second rake face 53 is connected to the second cutting edge 73. The second cutting edge 73 extends along a distal end edge of the second rake face 53. The second cutting edge 73 is disposed on the radially outer side of the first cutting edge 72 and is connected to a radially outer end of the first cutting edge 72 via an apex portion 74 that is convex in the drill rotation direction T.

In the present embodiment, the second cutting edge 73 has a linear shape. However, the present invention is not limited thereto, and the second cutting edge 73 may have a concave curve shape. In a case where the second cutting edge 73 has a concave curve shape, the second cutting edge 73 preferably has, for example, a concave curve shape that is recessed in the counter drill rotation direction and has a large curvature radius (that is, a large R). Alternatively, the second cutting edge 73 may have a convex curve shape that bulges in the drill rotation direction T.

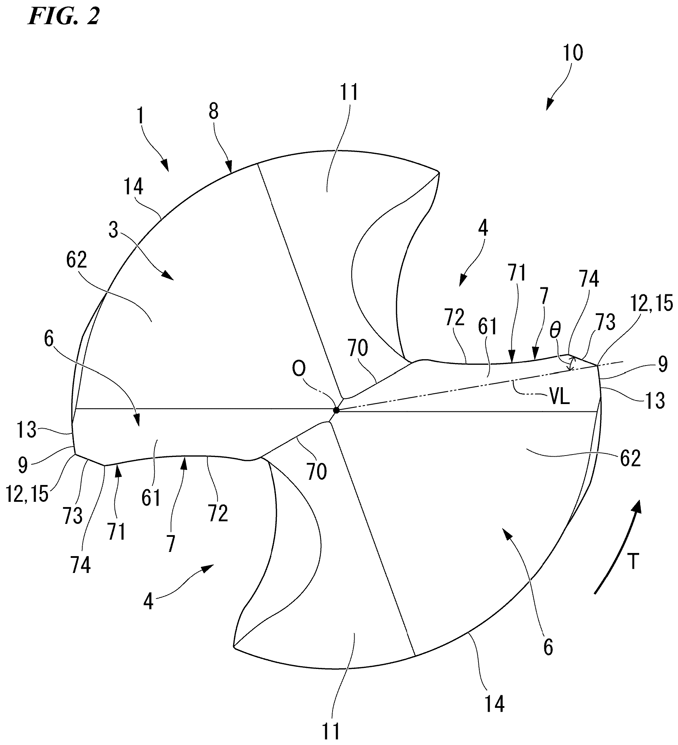

As shown in FIG. 2, a radial rake angle θ of the second cutting edge 73 is a negative angle over the entire length of the second cutting edge 73. Here, as shown in FIG. 2, the term "radial rake angle θ of the second cutting edge 73" refers to an angle θ formed between the second cutting edge 73 (or a part thereof) and a virtual straight line VL passing through the second cutting edge 73 and the center axis O when the drill 10 is viewed from the tip side in the axial direction. In addition, the phrase "radial rake angle θ of the second cutting edge 73 is a negative angle" refers to a case where the second cutting edge 73 extends in a direction opposite to the drill rotation direction T as the second cutting edge 73 extends toward the radially outer side.

The apex portion 74 connects the radially outer end of the first cutting edge 72 and the radially inner end of the second cutting edge 73. The apex portion 74 has a convex shape that protrudes in the drill rotation direction T.

Therefore, the cutting edge 7 of the present embodiment has a so-called curved blade shape in which the main cutting edge 71 has a concave blade shape (first cutting edge 72) and a convex portion (apex portion 74).

As shown in FIGS. 1 to 4, the margin 13 is disposed on the outer peripheral surface 8 and extends along the chip discharging flute 4. Specifically, the margin 13 is disposed at an end portion of the outer peripheral surface 8 in the drill rotation direction T, and extends in the counter drill rotation direction as the margin 13 extends toward the posterior end side in the axial direction. The margin 13 has a curved surface shape that is convex toward the radially outer side. The margin 13 has an arc shape centered on the center axis O in a cross-sectional view perpendicular to the center axis O.

The leading edge 12 is disposed at a ridge portion where the margin 13 and the second rake face 53 (rake face 5) are connected to each other. The margin 13 and the second rake face 53 are connected to each other via the leading edge 12. The leading edge 12 extends along the margin 13 and the second rake face 53. Specifically, the leading edge 12 extends in the counter drill rotation direction as the leading edge 12 extends toward the posterior end side in the axial direction. The margin 13 is located on a cylindrical rotation locus (not shown) obtained by rotating the leading edge 12 around the center axis O.

A back taper may be applied to the leading edge 12. In this case, the leading edge 12 is located slightly on the radially inner side as the leading edge 12 extends toward the posterior end side in the axial direction.

The body clearance 14 is disposed on the outer peripheral surface 8. The body clearance 14 is disposed adjacent to the margin 13 in the counter drill rotation direction of the margin 13. The body clearance 14 is located on the radially inner side with respect to the margin 13. The body clearance 14 faces an inner peripheral surface of a machined hole of a work material with a gap in the radial direction during drilling.

The outer peripheral corner 15 is disposed at a corner portion where the cutting edge 7 and the leading edge 12 are connected to each other. Specifically, the outer peripheral corner 15 connects a radially outer end of the second cutting edge 73 of the main cutting edge 71 and a distal end of the leading edge 12.

The shoulder portion 9 is disposed at a ridge portion where the margin 13 and the first flank face 61 (flank face 6) are connected to each other. The shoulder portion 9 is disposed at a distal outer peripheral portion of the body 1 and extends in the circumferential direction about the center axis O. The shoulder portion 9 extends from the outer peripheral corner 15 in a direction opposite to the drill rotation direction T. Specifically, the shoulder portion 9 extends slightly toward the posterior end side as the shoulder portion 9 extends toward the counter drill rotation direction.

Although not particularly shown, the body 1 has a fastening mechanism with the shank. The fastening mechanism includes, for example, a substantially cylindrical fitting portion that protrudes from a rear end surface of the body 1 to the posterior end side, and a through-hole that penetrates the body 1 in the axial direction.

The fitting portion is inserted into a mounting hole (not shown) of the shank. A plurality of (for example, a pair of) through-holes are provided in the body 1, each at a distance from the others in the circumferential direction. A screw member is inserted into each through-hole and is screwed into a female threaded hole of the shank. As a result, the body 1 is detachably fixed to the shank.

Although not particularly shown, the rotational support portion is configured by a surface or the like facing the counter drill rotation direction, which is provided in a part of the body 1. The rotational support portion comes into contact with a rotational receiving portion of the shank that faces the drill rotation direction T. A plurality of (for example, a pair of) sets of the rotational support portion and the rotational receiving portion are provided, each at a distance from the others in the circumferential direction. As a result, the body 1 can stably receive the torque in the drill rotation direction T transmitted from the main spindle or the like via the shank.

### [Honing]

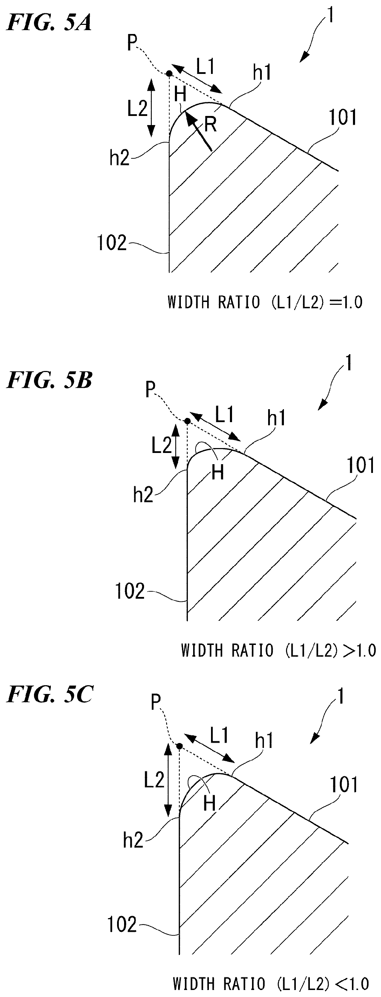

Each of the thinning edge 70, the main cutting edge 71, the leading edge 12, the shoulder portion 9, the first boundary ridge 54, and the second boundary ridge 55 disposed in each ridge portion of the body 1 has honing H of which a cross section perpendicular to each ridge portion has a convex curve shape, as schematically shown in FIGS. 5A, 5B, and 5C. The honing H is a so-called rounded honing. The honing H extends along each ridge portion.

In the following description, as shown in FIGS. 5A, 5B, and 5C, in a cross section perpendicular to the ridge portion (a cross section perpendicular to a direction in which the honing H extends), a surface connected to a first end portion h1 of both end portions h1 and h2 of the honing H is defined as a first surface 101, and a surface connected to a second end portion h2 is defined as a second surface 102. The first end portion h1 is a portion in which the honing H and the first surface 101 are connected to each other. The second end portion h2 is a portion in which the honing H and the second surface 102 are connected to each other. The first surface 101 is, for example, a rake face 5 or the like, and the second surface 102 is, for example, a flank face 6 or the like. Details of the first surface 101 and the second surface 102 connected to the honing H of each ridge portion will be described separately later.

In each cross section shown in FIGS. 5A, 5B, and 5C, the first surface 101 may be connected to match a tangent line of the honing H passing through the first end portion h1, that is, to be in contact with the first end portion h1, or may extend in a direction different from the tangent line on the first end portion h1 and may be smoothly connected to the first end portion h1.

In addition, in each cross section, the second surface 102 may be connected to match a tangent line of the honing H passing through the second end portion h2, that is, to be in contact with the second end portion h2, or may extend in a direction different from the tangent line on the second end portion h2 and may be smoothly connected to the second end portion h2.

A reference numeral R in FIG. 5A indicates a curvature radius of the honing H. The drill 10 of the present embodiment has, first, a special technical feature regarding the honing curvature radius R. In the present embodiment, the term "honing curvature radius R" is closely related to a honing width. The honing width refers to a dimension corresponding to a distance between both end portions h1 and h2 of the honing H (a linear distance between the first end portion h1 and the second end portion h2) in a cross section perpendicular to a direction in which the honing H extends (ridge portion).

That is, in a case where the honing curvature radius R is large, the honing width tends to be large accordingly, and in a case where the honing curvature radius R is small, the honing width tends to be small accordingly. In other words, in a case where the honing width is small, the honing curvature radius R is also small, and in a case where the honing width is large, the honing curvature radius R is also large. Therefore, a magnitude relationship between each honing curvature radius R described later in the present embodiment may be replaced with a magnitude relationship between each honing width. That is, the magnitude relationship between the honing curvature radii R corresponds to the magnitude relationship between the honing widths.

The honing curvature radius R at a position within 1.5 mm from the outer peripheral corner 15 toward the posterior end side in the leading edge 12 is 25 µm or more and 80 µm or less. The honing curvature radius R of the leading edge 12 is more preferably, for example, 40 µm or more and 70 µm or less.

In addition, the honing curvature radius R at a position within 1.5 mm from the outer peripheral corner 15 toward the posterior end side in the leading edge 12 is smaller than the honing curvature radius R of the radially outer end portion (the second cutting edge 73 in the present embodiment) connected to the outer peripheral corner 15 in the main cutting edge 71.

Here, the honing H of the leading edge 12 extends over the posterior end side beyond a position of 1.5 mm from the outer peripheral corner 15 toward the posterior end side in the leading edge 12. Specifically, the honing curvature radius R (honing width) of the leading edge 12 has a constant magnitude in a predetermined range including a position within 1.5 mm from the outer peripheral corner 15 toward the posterior end side in the leading edge 12, and is constant or gradually decreases toward the posterior end side beyond the predetermined range.

More specifically, the honing curvature radius R (honing width) of the leading edge 12 at a position within 3 mm beyond a position of 1.5 mm from the outer peripheral corner 15 toward the posterior end side in the leading edge 12 has substantially the same value as the honing curvature radius R at a position within 1.5 mm, or a slightly smaller value. The honing curvature radius R of the leading edge 12 at a position within 3 mm beyond a position of 1.5 mm from the outer peripheral corner 15 toward the posterior end side in the leading edge 12 is, for example, 30 µm or more and 70 µm or less.

In addition, in the present embodiment, a relationship of [0.9 ≤ R1/R2 ≤ 1.5] is satisfied by setting the honing curvature radius of a portion (the first cutting edge 72 in the present embodiment) of the main cutting edge 71 located on the radially inner side of the radially outer end portion (the second cutting edge 73 in the present embodiment) as R1 and setting the honing curvature radius of the radially outer end portion of the main cutting edge 71 as R2. It is preferable that [R1/R2] is 1.0 or more. It is more desirable that the honing curvature radius R1 of the first cutting edge 72 is larger than the honing curvature radius R2 of the second cutting edge 73.

In addition, the honing curvature radius R1 of the first cutting edge 72 changes in the edge length direction of the first cutting edge 72. The honing curvature radius R1 of the first cutting edge 72 gradually increases, for example, from both end portions in the edge length direction of the first cutting edge 72 toward the center portion. The honing curvature radius R1 of the first cutting edge 72 is maximized at the lowermost point of the first cutting edge 72 located in the direction opposite to the drill rotation direction T (the counter drill rotation direction).

The honing curvature radius R1 of a portion (the first cutting edge 72 in the present embodiment) of the main cutting edge 71 located on the radially inner side of the radially outer end portion is, for example, 60 µm or more and 100 µm or less. In addition, the honing curvature radius R2 of the radially outer end portion (the second cutting edge 73 in the present embodiment) of the main cutting edge 71 connected to the outer peripheral corner 15 is, for example, 50 µm or more and 80 µm or less.

In addition, in the present embodiment, a honing curvature radius R of a region within 7% of the drill blade diameter from the center axis O toward the radially outer side in the thinning edge 70 is smaller than the honing curvature radius R1 of a portion (the first cutting edge 72 in the present embodiment) of the main cutting edge 71 located on the radially inner side of the radially outer end portion, with a diameter dimension of a rotation locus about the center axis O of the cutting edge 7 as the drill blade diameter. Specifically, the honing curvature radius R of the region within 7% of the drill blade diameter from the center axis O toward the radially outer side in the thinning edge 70 is, for example, 40 µm or more and 80 µm or less.

In addition, the honing curvature radius R of the shoulder portion 9 is smaller than the honing curvature radius R2 of the radially outer end portion (the second cutting edge 73 in the present embodiment) of the main cutting edge 71 connected to the outer peripheral corner 15. Specifically, the honing curvature radius R of the shoulder portion 9 is, for example, 40 µm or more and 70 µm or less.

In addition, the drill 10 of the present embodiment has, secondly, a special technical feature regarding a width ratio of the honing H.

In each cross section shown in FIGS. 5A, 5B, and 5C, a distance from an intersection point P between an extension line of the first surface 101 and an extension line of the second surface 102 to the first end portion h1 is defined as a first width dimension L1, a distance from the intersection point P to the second end portion h2 is defined as a second width dimension L2, and [L1/L2] is defined as a width ratio. In the present embodiment, the width ratio [L1/L2] may be simply referred to as a width ratio.

FIG. 5A shows a case where the width ratio [L1/L2] of the honing H is 1.0. FIG. 5B shows a case where the width ratio [L1/L2] of the honing H is larger than 1.0. FIG. 5C shows a case where the width ratio [L1/L2] of the honing H is smaller than 1.0.

In the thinning edge 70 and the main cutting edge 71, the first surface 101 is the rake face 5, and the second surface 102 is the flank face 6. Specifically, in the thinning edge 70, the first surface 101 is the thinning rake face 50, and the second surface 102 is the first flank face 61. In addition, in the main cutting edge 71, the first surface 101 is the main rake face 51, and the second surface 102 is the first flank face 61. More specifically, in the main cutting edge 71, the first surface 101 of the first cutting edge 72 is the first rake face 52, and the second surface 102 is the first flank face 61. In the main cutting edge 71, the first surface 101 of the second cutting edge 73 is the second rake face 53, and the second surface 102 is the first flank face 61.

The width ratio [L1/L2] of the thinning edge 70 is preferably larger than the width ratio [L1/L2] of the radially outer end portion (in the present embodiment, the second cutting edge 73) of the main cutting edge 71 connected to the outer peripheral corner 15, and is preferably 1.1 times or more the width ratio [L1/L2] of the radially outer end portion, and may be, for example, 1.4 times. In addition, the width ratio of the thinning edge 70 increases as the thinning edge 70 approaches the center axis O in the edge length direction in which the thinning edge 70 extends. The width ratio [L1/L2] of the thinning edge 70 is preferably 1.0 or more. The width ratio [L1/L2] of the thinning edge 70 may be, for example, 1.0 or more and 1.4 or less.

The width ratio [L1/L2] of the portion of the main cutting edge 71 located radially inward of the radially outer end portion is preferably larger than the width ratio [L1/L2] of the radially outer end portion of the main cutting edge 71, and is preferably 1.1 times or more the width ratio [L1/L2] of the radially outer end portion, and may be, for example, 1.3 times. That is, in the present embodiment, the width ratio [L1/L2] of the first cutting edge 72 is larger than the width ratio [L1/L2] of the second cutting edge 73.

In addition, the width ratio of the first cutting edge 72 changes in the edge length direction of the first cutting edge 72. The width ratio of the first cutting edge 72 gradually increases, for example, from both end portions in the edge length direction of the first cutting edge 72 toward the center portion. The width ratio of the first cutting edge 72 is maximized at the lowermost point located in the direction opposite to the drill rotation direction T (counter drill rotation direction) in the first cutting edge 72. The width ratio [L1/L2] of the first cutting edge 72 is preferably 1.0 or more. The width ratio [L1/L2] of the first cutting edge 72 may be, for example, 1.0 or more and 1.3 or less.

The width ratio of the second cutting edge 73 is the smallest among the components of the cutting edge 7. More specifically, the width ratio of the outermost end (the radially outermost end of the second cutting edge 73) located at the outer peripheral corner 15 in the main cutting edge 71 is the smallest among the width ratios of the cutting edge 7. The width ratio [L1/L2] of the second cutting edge 73 is preferably 1.0 or less. The width ratio [L1/L2] of the second cutting edge 73 may be, for example, 0.8 or more and 1 or less.

In the leading edge 12, the first surface 101 is the rake face 5, and the second surface 102 is the margin 13. Specifically, in the leading edge 12, the first surface 101 is the second rake face 53, and the second surface 102 is the margin 13. The width ratio [L1/L2] at a position within 1.5 mm from the outer peripheral corner 15 toward the posterior end side in the leading edge 12 is, for example, 0.7 or more and 1.3 or less.

In the shoulder portion 9, the first surface 101 is the flank face 6, and the second surface 102 is the margin 13. Specifically, in the shoulder portion 9, the first surface 101 is the first flank face 61, and the second surface 102 is the margin 13. The width ratio [L1/L2] of the shoulder portion 9 is, for example, 0.7 or more and 1.3 or less.

### [Operations and effects according to present embodiment]

In the drill 10 of the present embodiment described above, each honing H of the thinning edge 70, the main cutting edge 71, and the leading edge 12 has a convex curve shape (convex R shape) in a cross section perpendicular to each ridge portion, and is a so-called rounded honing. Therefore, in the low-to-medium efficiency machining conditions or the drilling of a large workpiece, wear or adhesion on a honing surface can be suppressed. Specifically, for example, unlike the present embodiment, in a case where the honing H of each component (particularly, the main cutting edge 71 or the like) of the cutting edge 7 is a chamfer honing or the like in which a flat surface is present, there is a concern that crushing wear may be promoted in the honing surface in low-to-medium efficiency machining conditions or in drilling of a large workpiece, and adhesion or chipping may occur at an early stage.

In addition, the position within 1.5 mm from the outer peripheral corner 15 toward the posterior end side in the leading edge 12 is located in the tip portion even in the leading edge 12, and is a portion that is likely to receive cutting resistance from the inner peripheral surface of the machined hole of the work material.

In the drill 10 of the present embodiment, the honing curvature radius R at the position of the leading edge 12 is 25 µm or more and 80 µm or less. As a result, the progression of wear can be stably suppressed.

Specifically, unlike the present embodiment, in a case where the honing curvature radius R of the leading edge 12 is larger than 80 µm, the region in which the radial rake has a strong negative angle in the honing H is increased (the honing H becomes a strong negative honing), and the cutting resistance is significantly increased, causing concern that the wear may progress at an early stage.

On the other hand, even in a case where the honing curvature radius R of the leading edge 12 is smaller than 25 µm, the wear is also likely to progress. In addition, in a case where the ridge portion has a sharp cross-sectional shape (a so-called pin-cushion shape), the function obtained by the honing H is reduced, and chipping or the like is likely to occur.

In addition, in the present embodiment, the honing curvature radius R of the leading edge 12 is smaller than the honing curvature radius R (R2) of the radially outer end portion (second cutting edge 73) disposed adjacent to the outer peripheral corner 15 in the main cutting edge 71. In other words, the honing curvature radius R (R2) of the radially outer end portion (second cutting edge 73) of the main cutting edge 71 is larger than the honing curvature radius R of the leading edge 12. With this configuration, it is possible to stably suppress the progression of wear in the vicinity of the leading edge 12 while suppressing chipping or the like at the radially outer end portion where the cutting speed is the highest even in the main cutting edge 71.

As described above, with the drill 10 of the present embodiment, it is possible to improve the wear resistance, and thus it is possible to achieve a long life of the tool. In particular, in a case where the present embodiment is applied to low-to-medium efficiency machining conditions or large workpiece drilling, the present embodiment exhibits a particularly remarkable effect.

In addition, in the present embodiment, the main cutting edge 71 includes the first cutting edge 72 that is disposed on the radially outer side of the thinning edge 70 and has a concave curve shape that is recessed in a direction opposite to the drill rotation direction T about the center axis O, and the second cutting edge 73 that is disposed on the radially outer side of the first cutting edge 72 and is connected to the radially outer end of the first cutting edge 72, and the second cutting edge 73 constitutes the radially outer end portion of the main cutting edge 71 that is connected to the outer peripheral corner 15.

According to the above configuration, in a case where the main cutting edge 71 has a so-called curved blade shape having a concave blade shape (first cutting edge 72), the excellent operational effects of the present embodiment can be obtained.

In addition, in the present embodiment, in a case where the honing curvature radius of the portion (first cutting edge 72) of the main cutting edge 71 that is located on the radially inner side of the radially outer end portion is denoted by R1, and the honing curvature radius of the radially outer end portion (second cutting edge 73) of the main cutting edge 71 is denoted by R2, the relationship of [0.9 ≤ R1/R2 ≤ 1.5] is satisfied.

In the main cutting edge 71, the portion (first cutting edge 72) that is located on the radially inner side of the radially outer end portion tends to be more likely to cause crater wear due to abrasion of chips, as compared with the radially outer end portion (second cutting edge 73) connected to the outer peripheral corner 15. Since the crater wear is likely to occur in the vicinity of the boundary between the honing face and the rake face 5, the crater wear can be effectively suppressed by increasing the honing size (honing curvature radius R).

From the above viewpoint, by setting the value of the ratio of the honing curvature radius [R1/R2] to 1.0 or more, the honing curvature radius R1 of the portion of the main cutting edge 71 that is located on the radially inner side of the radially outer end portion can be stably secured to be large, which is preferable. However, in a case where the value of the ratio [R1/R2] is close to 1.0, the value of the ratio [R1/R2] may be less than 1.0 due to manufacturing errors or the like. Therefore, in the present embodiment, the value of the ratio [R1/R2] is set to [0.9 ≤ R1/R2].

However, in the present embodiment, since the honing curvature radius R2 is larger than the honing curvature radius R of the leading edge 12, even in a case where the value of the ratio [R1/R2] is 0.9 or more, the size of the honing curvature radius R1 is also sufficiently secured. Therefore, the effect of suppressing the crater wear is stably obtained.

In a case where the value of the ratio [R1/R2] is less than 0.9 or exceeds 1.5, a difference between the honing curvature radius R1 and the honing curvature radius R2 increases, and thus there is a tendency that wear is likely to be promoted in a case where the honing size is small. Therefore, it is preferable that the value of the ratio [R1/R2] is in the above range of [0.9 ≤ R1/R2 ≤ 1.5].

In addition, in the present embodiment, the shoulder portion 9 has the honing H of which the cross section perpendicular to the ridge portion has a convex curve shape, and the honing curvature radius R of the shoulder portion 9 is smaller than the honing curvature radius R2 of the radially outer end portion (second cutting edge 73) of the main cutting edge 71 that is connected to the outer peripheral corner 15.

In the above configuration, the honing curvature radius R of the shoulder portion 9 is smaller than the honing curvature radius R2 of the radially outer end portion (second cutting edge 73) of the main cutting edge 71 that is disposed adjacent to the outer peripheral corner 15. In other words, the honing curvature radius R2 of the radially outer end portion of the main cutting edge 71 is larger than the honing curvature radius R of the shoulder portion 9. With this configuration, particularly in low-to-medium efficiency machining conditions or in drilling of a large workpiece, it is possible to stably suppress the progression of wear in the vicinity of the shoulder portion 9 while suppressing chipping or the like at the radially outer end portion where the cutting speed is the highest among the main cutting edges 71.

In addition, in the present embodiment, the thinning edge 70 has the honing H of which the cross section perpendicular to the ridge portion has a convex curve shape, and the honing curvature radius R of the region within 7% of the drill blade diameter from the center axis O toward the radially outer side in the thinning edge 70 is smaller than the honing curvature radius R1 of the portion (first cutting edge 72) of the main cutting edge 71 that is located on the radially inner side of the radially outer end portion.

In this case, during drilling, the cutting performance of the thinning edge 70 that first bites into the work material, particularly in the vicinity of the center axis O, is stably improved. Therefore, it is possible to perform drilling with higher accuracy.

In addition, in the present embodiment, the honing curvature radius R1 of the first cutting edge 72 is maximized at the lowermost point of the first cutting edge 72 that is located in the direction opposite to the drill rotation direction T.

In a drill of the related art, at the lowermost point of the concave blade shape (the first cutting edge 72 in the present embodiment) that has a concave curve shape and is located in the direction opposite to the drill rotation direction, stress due to chip rubbing is strong, and damage due to crater wear tends to be significant. Since the crater wear is likely to occur in the vicinity of the boundary between the honing face and the rake face 5, the crater wear can be effectively suppressed by maximizing the honing size (honing curvature radius R) at the lowermost point of the first cutting edge 72 as in the present embodiment.

In addition, in the present embodiment, the first boundary ridge 54 that extends along the boundary portion where the thinning rake face 50 and the main rake face 51 are connected to each other and that is convex toward the drill rotation direction T has the honing H.

In this case, the first boundary ridge 54 that protrudes in the drill rotation direction T is prevented from being chipped due to rubbing of chips or the like.

In addition, in the present embodiment, the second boundary ridge 55 that extends along the boundary portion where the first rake face 52 and the second rake face 53 are connected to each other and that is convex toward the drill rotation direction T has the honing H.

In this case, the second boundary ridge 55 that protrudes in the drill rotation direction T is prevented from being chipped due to rubbing of chips or the like.

In addition, in the present embodiment, the honing H of the leading edge 12 extends beyond the position of 1.5 mm from the outer peripheral corner 15 toward the posterior end side in the leading edge 12 and further extends to the posterior end side.

In this case, the progression of wear and chipping of the leading edge 12 can be stably suppressed in a wider range along the ridge portion.

In addition, in the drill 10 of the present embodiment, when the width ratio [L1/L2] is defined in the cross section perpendicular to the direction in which each honing H extends, the width ratio of the honing H of the thinning edge 70 is larger than the width ratio of the honing H of the radially outer end portion (second cutting edge 73) connected to the outer peripheral corner 15 in the main cutting edge 71. In other words, the width ratio of the honing H of the radially outer end portion of the main cutting edge 71 is smaller than the width ratio of the honing H of the thinning edge 70.

Specifically, when the width ratios of the honings H are compared, in the thinning edge 70, the proportion of the first width dimension L1 on the rake face 5 side is increased, and in the radially outer end portion (second cutting edge 73) of the main cutting edge 71, the proportion of the second width dimension L2 on the flank face 6 side is increased.

During drilling, in the thinning edge, chips that are compressed are rubbed, and thus damage due to crater wear tends to be remarkable. Since the crater wear is likely to occur in the vicinity of the boundary between the honing face and the rake face 5, the crater wear can be stably suppressed by increasing the width ratio of the thinning edge 70 (increasing the proportion of the first width dimension L1 on the rake face 5 side) as in the present embodiment.

In addition, in the radially outer end portion of the main cutting edge, wear on the flank face 6 side tends to occur remarkably. Therefore, as in the present embodiment, the flank face wear can be stably suppressed by reducing the width ratio of the radially outer end portion of the main cutting edge 71 (increasing the proportion of the second width dimension L2 on the flank face 6 side).

As described above, according to the drill 10 of the present embodiment, the wear resistance can be improved, and thus the life of the tool can be extended. In particular, in a case where the present embodiment is applied to low-to-medium efficiency machining conditions or large workpiece drilling, the present embodiment exhibits a particularly remarkable effect.

In addition, in the present embodiment, the width ratio [L1/L2] at a position within 1.5 mm from the outer peripheral corner 15 toward the posterior end side in the leading edge 12 is 0.7 or more and 1.3 or less.

The leading edge tends to be damaged due to wear on the margin side. In particular, a position within 1.5 mm from the outer peripheral corner toward the posterior end side in the leading edge is located in the tip portion of the leading edge, and is a portion that is likely to receive cutting resistance from the inner peripheral surface of the machined hole of the work material.

As a result of intensive research by the present inventors, it was confirmed that, in a case where the proportion of the second width dimension L2 on the margin 13 side is excessively increased with respect to the width ratio of the honing H of the leading edge 12, the cutting resistance is significantly increased, and the wear progresses at an early stage. In addition, in a case where the proportion of the first width dimension L1 on the rake face 5 side is small, the wear on the rake face 5 side progresses.

For the above reason, the width ratio of the leading edge 12 is preferably 0.7 or more and 1.3 or less, and it is more desirable as the width ratio is closer to 1.0.

In addition, in the present embodiment, the width ratio [L1/L2] of a portion (first cutting edge 72) of the main cutting edge 71 located on the radially inner side with respect to the radially outer end portion is larger than the width ratio [L1/L2] of the radially outer end portion (second cutting edge 73) of the main cutting edge 71.

In the main cutting edge 71, the portion (first cutting edge 72) that is located on the radially inner side of the radially outer end portion tends to be more likely to cause crater wear due to abrasion of chips, as compared with the radially outer end portion (second cutting edge 73) connected to the outer peripheral corner 15. Since the crater wear is likely to occur in the vicinity of the boundary between the honing surface and the rake face 5, the width ratio of the honing H of the portion of the main cutting edge 71 located on the radially inner side with respect to the radially outer end portion is increased (the proportion of the first width dimension L1 on the rake face 5 side is increased), so that the crater wear can be effectively suppressed.

In addition, in the radially outer end portion (second cutting edge 73) of the main cutting edge 71, the wear on the flank face 6 side tends to progress. Therefore, as in the above configuration, the width ratio of the honing H of the radially outer end portion of the main cutting edge 71 is reduced (the proportion of the second width dimension L2 on the flank face 6 side is increased), so that the flank face wear can be effectively suppressed.

In addition, in the present embodiment, the width ratio [L1/L2] of the thinning edge 70 increases as the thinning edge 70 approaches the center axis O in the edge length direction in which the thinning edge 70 extends.

In the thinning edge, the compressed chips are abraded, and therefore damage due to the crater wear is likely to occur. In particular, the crater wear tends to be more remarkable as the thinning edge approaches the center axis in the edge length direction.

Therefore, as in the present embodiment, the width ratio of the honing H of the thinning edge 70 is increased as the thinning edge 70 approaches the center axis O, so that it is possible to effectively suppress the crater wear over the entire edge length region including the vicinity of the center axis O of the thinning edge 70.

In addition, in the present embodiment, the width ratio [L1/L2] of the outermost end of the main cutting edge 71 located at the outer peripheral corner 15 is the smallest among the width ratios [L1/L2] of the cutting edges 7.

In the outermost end (outer peripheral corner) of the main cutting edge, the wear on the flank face side tends to progress remarkably. Therefore, as in the present embodiment, the width ratio of the honing H of the outermost end (outer peripheral corner 15) of the main cutting edge 71 is set to the minimum among the entire cutting edges 7 (the main cutting edge 71 and the thinning edge 70), so that the flank face wear can be effectively suppressed.

In addition, in the present embodiment, the width ratio [L1/L2] of the first cutting edge 72 is maximized at the lowermost point of the first cutting edge 72 located in the direction opposite to the drill rotation direction T.

In a drill of the related art, at the lowermost point of the concave blade shape (the first cutting edge 72 in the present embodiment) that has a concave curve shape and is located in the direction opposite to the drill rotation direction, stress due to chip rubbing is strong, and damage due to crater wear tends to be significant. Since the crater wear is likely to occur near the boundary between the honing face and the rake face 5, as in the present embodiment, the width ratio of the honing H at the lowermost point of the first cutting edge 72 is maximized (the proportion of the first width dimension L1 on the rake face 5 side is maximized), so that the crater wear can be effectively suppressed.

In addition, in the present embodiment, the width ratio [L1/L2] of the shoulder portion 9 is 0.7 or more and 1.3 or less. As in the above configuration, when the width ratio of the honing H of the shoulder portion 9 is 0.7 or more and 1.3 or less, the problem that the wear of any one of the flank face 6 and the margin 13 disposed on both sides of the shoulder portion 9 progresses early and affects the tool life is stably suppressed. The width ratio of the shoulder portion 9 is more preferably close to 1.0.

In addition, in the present embodiment, the width ratio [L1/L2] of the thinning edge 70 is 1.0 or more. In this case, the width ratio of the honing H of the thinning edge 70 can be stably increased (the proportion of the first width dimension L1 on the rake face 5 side can be increased), and the effect of suppressing the crater wear is more remarkably obtained.

In addition, in the present embodiment, the width ratio [L1/L2] of the first cutting edge 72 is 1.0 or more.

In this case, the width ratio of the honing H of the first cutting edge 72 can be stably increased (the proportion of the first width dimension L1 on the rake face 5 side can be increased), and the effect of suppressing the crater wear is more remarkably obtained.

In addition, in the present embodiment, the width ratio [L1/L2] of the second cutting edge 73 is 1.0 or less.

In this case, the width ratio of the honing H of the second cutting edge 73 can be stably decreased (the proportion of the second width dimension L2 on the flank face 6 side can be increased), and the effect of suppressing the flank face wear is more remarkably obtained.

### [Other configurations included in present invention]

The present invention is not limited to the above-described embodiment, and for example, as will be described below, the configuration can be changed without departing from the spirit of the present invention.

In the above-described embodiment, a case where the main cutting edge 71 of the cutting edge 7 has a so-called curved blade shape having a concave blade shape (first cutting edge 72) and a convex portion (apex portion 74) has been described, but the present invention is not limited thereto. Although not particularly shown, the main cutting edge 71 may have a linear shape. In this case, a region of the main cutting edge 71 within 7% of the drill blade diameter from the outer peripheral corner 15 toward the radially inner side is referred to as "radially outer end portion of the main cutting edge 71 connected to the outer peripheral corner 15" (corresponding to the second cutting edge 73 in the above-described embodiment).

According to the above-described configuration, in a case where the main cutting edge 71 has a so-called linear blade shape, the same excellent operational effects as those in the above-described embodiment can be obtained.

In addition, in the above-described embodiment, an example has been described in which the first cutting edge 72 and the second cutting edge 73 are connected to each other via the sharp apex portion 74 in the drill rotation direction T, but the present invention is not limited thereto. The first cutting edge 72 and the second cutting edge 73 may be connected to each other smoothly (to be continuously curved) without the sharp apex portion 74 interposed therebetween.

In the above-described embodiment, an example has been described in which the drill 10 is an indexable insert drill or a drill head, but the present invention is not limited thereto. As the drill of the present invention, a solid drill in which the body 1 and the shank are integrally formed by a single member may be adopted. Alternatively, for example, the body 1 and the shank may be separately manufactured and then integrated by brazing or the like to form the drill.

In the above-described embodiment, an example has been described in which the drill 10 is a two-blade twist drill, but the present invention is not limited thereto. The present invention may be applied to a drill with one blade or three or more blades.

The present invention may combine the configurations described in the above-described embodiment, modification example, and the like within a range not departing from the spirit of the present invention, and may add, omit, replace, or otherwise change the configurations. In addition, the present invention is not limited to the above-described embodiment and the like, and is limited only by the scope of the claims. Examples

Hereinafter, the present invention will be specifically described with reference to examples. However, the present invention is not limited to these examples.

### <Wear confirmation test 1>

As a wear confirmation test 1, a confirmation test of the relationship between the honing curvature radius R of each ridge portion of the body 1 and the wear resistance was performed by drilling.

As Example 1 of the present invention, the drill 10 of the above-described embodiment was prepared. Specifically, in the drill 10 of Example 1, the honing curvature radius R at a position within 1.5 mm from the outer peripheral corner 15 toward the posterior end side in the leading edge 12 is 54 µm. In addition, the honing curvature radius R2 of the second cutting edge 73 is 63 µm, and the honing curvature radius R1 of the first cutting edge 72 is 75 µm.

In addition, as Comparative Examples 1 and 2 in the related art, drills each having a technical idea partially different from the drill 10 described in the above-described embodiment were prepared.

Specifically, in the drill of Comparative Example 1, the honing curvature radius R at a position within 1.5 mm from the outer peripheral corner 15 toward the posterior end side in the leading edge 12 is 64 µm. In addition, the honing curvature radius R2 of the second cutting edge 73 is 50 µm, and the honing curvature radius R1 of the first cutting edge 72 is 63 µm. Therefore, in the drill of Comparative Example 1, the honing curvature radius R at a position within 1.5 mm from the outer peripheral corner 15 toward the posterior end side in the leading edge 12 is larger than the honing curvature radius R2 of the second cutting edge 73.

In addition, in the drill of Comparative Example 2, the honing curvature radius R at a position within 1.5 mm from the outer peripheral corner 15 toward the posterior end side in the leading edge 12 is 17 µm. In addition, the honing curvature radius R2 of the second cutting edge 73 is 41 µm, and the honing curvature radius R1 of the first cutting edge 72 is 58 µm. Therefore, in the drill of Comparative Example 2, the honing curvature radius R at a position within 1.5 mm from the outer peripheral corner 15 toward the posterior end side in the leading edge 12 is outside the numerical range of 25 µm to 80 µm.

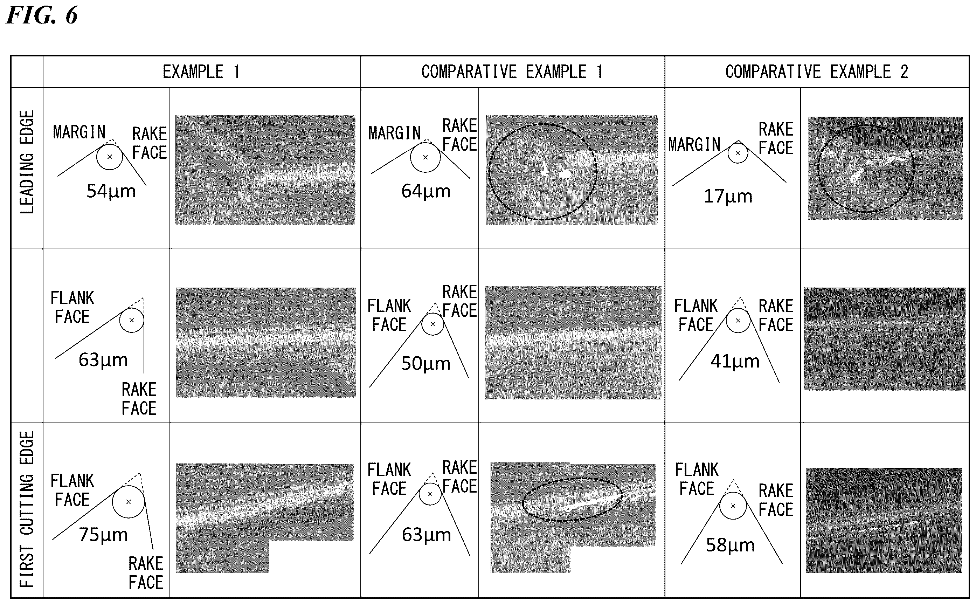

For each of the drills of Example 1 and Comparative Examples 1 and 2, a plurality of drilling operations were performed under the following cutting conditions, and observation was performed by imaging in the vicinity of each honing H. The number of the drilling operations was set to at least one or more until wear was observed in at least one or more drills. The results are shown in FIG. 6 as enlarged images in the vicinity of each cutting edge. In addition, in FIG. 6, a schematic cross-sectional view in the vicinity of each cutting edge is also shown.

### <Cutting conditions>

· Drill blade diameter: φ24.0 mm
· Work material: S50C
· Cutting speed: vc = 100 m/min
· Feed: fr = 0.35 mm/rev

As shown in FIG. 6, in Comparative Examples 1 and 2, when the drilling operation with a cutting length (machining length) of about 29 m was performed, the progression of wear was confirmed in the vicinity of the leading edge 12 and the vicinity of the first cutting edge 72. On the other hand, in Example 1 in which the same number of drilling operations as in Comparative Examples 1 and 2 were performed, the progression of wear was not observed anywhere in the vicinity of the leading edge 12, the vicinity of the second cutting edge 73, or the vicinity of the first cutting edge 72. The progression of wear in Comparative Examples 1 and 2 can be confirmed by comparing the degree of damage when the same number of drilling operations as in Example 1 were performed. In Example 1, even when the cutting length was about 55 m, the progression of wear was not observed. In addition, even when the cutting length exceeded about 150 m, the drill was in a state in which machining could be performed.

In addition, although not particularly shown, as a result of intensive research conducted by the inventors of the present invention on the relationship between the honing curvature radius R of each ridge portion of the body 1 and the wear resistance, the following findings were obtained.

In many of the drills in the related art, which are mainly solid drills, the honing curvature radius R at a position within 1.5 mm from the outer peripheral corner 15 toward the posterior end side in the leading edge 12 is about 10 to 20 µm. As a result of the inventors of the present invention studying the improvement of damage to the margin 13 of the drill 10, it was found that, when the honing curvature radius R at the position within 1.5 mm is increased to about 25 to 30 µm, the advantage over the related art is obtained. From such findings, the lower limit value of the numerical range of the honing curvature radius R at the position within 1.5 mm is 25 µm or more.

In addition, it was found that, even when the honing curvature radius R at the position within 1.5 mm is too large, the coating is peeled off early, and the wear is promoted. It is considered that this is due to an increase in cutting resistance. Since the cutting resistance depends on various conditions such as the tool diameter and the cutting conditions, the appropriate honing size (honing curvature radius R) at the position within 1.5 mm varies depending on the various conditions. However, when various combinations are assumed in a practical drill 10, the upper limit value of the numerical range of the honing curvature radius R at the position within 1.5 mm is 80 µm or less.

Specifically, when a drill having a honing curvature radius R of 90 µm at the position within 1.5 mm was prepared as a comparative example, and a drilling operation was performed under the cutting conditions of a drill blade diameter: φ18 mm, a work material: S50C, a cutting speed: vc = 100 m/min, and a feed: fr = 0.3 mm/rev, the tool life of the drill of the comparative example was a machining length of about 60 m.

On the other hand, when a drill 10 having a honing curvature radius R of 60 µm at the position within 1.5 mm was prepared as an example of the present invention, and a drilling operation was performed under the same cutting conditions as described above, the tool life of the drill 10 of the example reached a machining length of about 170 m. Regarding the coating on the body 1, the same coating was formed on each of the drill of the comparative example and the drill of the example.

Further, two drills in which a different coating from the above-described coating was formed on the body 1 were prepared, the honing curvature radius R at the position within 1.5 mm of one drill was set to 90 µm, and the honing curvature radius R at the position within 1.5 mm of the other drill was set to 150 µm. That is, these two drills are comparative examples. Then, when the drilling operation was performed using each of the two drills, the tool life of one drill (honing curvature radius R: 90 µm) was a machining length of about 80 m. In addition, the tool life of the other drill (honing curvature radius R: 150 µm) was a machining length of about 50 m.

As described above, as the honing curvature radius R at the position within 1.5 mm increases beyond 80 µm, the cutting resistance tends to increase, and the tool life tends to decrease.

### <Wear confirmation test 2>

As a wear confirmation test 2, a confirmation test of the relationship between the width ratio [L1/L2] of the honing H of each ridge portion of the body 1 and the wear resistance was performed through a drilling operation.

As Example 2 of the present invention, the drill 10 of the above-described embodiment was prepared. Specifically, in the drill 10 of Example 2, the width ratio [L1/L2] at the position within 1.5 mm from the outer peripheral corner 15 toward the posterior end side of the leading edge 12 is 0.91.

In addition, as Comparative Example 3 of the related art, a drill having a partially different technical idea from the drill 10 described in the above-described embodiment was prepared. Specifically, in the drill of Comparative Example 3, the width ratio [L1/L2] at the position within 1.5 mm from the outer peripheral corner 15 toward the posterior end side of the leading edge 12 is 0.64.

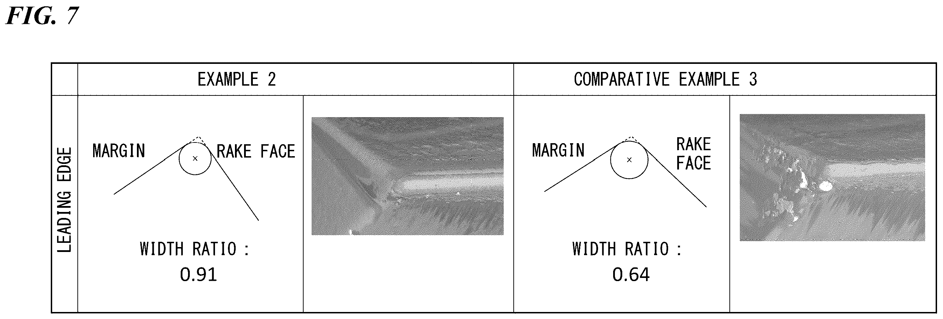

For each of the drills of Example 2 and Comparative Example 3, a plurality of drilling operations were performed under the same cutting conditions as in the above-described wear confirmation test 1, and the observation was performed by imaging in the vicinity of the honing H. The number of the drilling operations was set to at least one or more until wear was observed in at least one or more drills. The results are shown in FIG. 7 as enlarged images in the vicinity of each cutting edge. In addition, in FIG. 7, a schematic cross-sectional view in the vicinity of each cutting edge is also shown.

As shown in FIG. 7, in Comparative Example 3, the progression of wear was confirmed in the vicinity of the leading edge 12 when the drilling operation with a cutting length (machining length) of 29 m was performed. On the other hand, in Example 2 in which the same number of drilling operations as in Comparative Example 3 were performed, the progression of wear was not observed in the vicinity of the leading edge 12. The progression of wear in Comparative Examples 1 to 3 can be confirmed by comparing the degree of damage when the same number of drilling operations as in Example 2 were performed. In Example 2, even when the cutting length was about 55 m, the progression of wear was not observed. In addition, even when the cutting length exceeded about 150 m, the drill was in a state in which machining could be performed.

In addition, although not particularly shown, as a result of intensive research conducted by the inventors of the present invention on the relationship between the width ratio [L1/L2] of the honing H of each ridge portion of the body 1 and the wear resistance, the following findings were obtained.

In Comparative Example 3, an example in which the width ratio [L1/L2] at a position within 1.5 mm from the outer peripheral corner 15 toward the posterior end side in the leading edge 12 deviated to the lower side (smaller side) of the numerical range of 0.7 or more and 1.3 or less was described, but it was found that in another example in which the width ratio [L1/L2] deviated to the upper side (larger side) of the numerical range, the wear was likely to progress.

It is considered that this is because, in a case where the honing shape is biased to either of the width dimensions L1 and L2 to such an extent that the width ratio [L1/L2] is outside the above-described numerical range, the damage is promoted due to a decrease in strength or an increase in cutting resistance due to a shortage of the width dimension L1 or L2. From this consideration, the width ratio [L1/L2] at the position within 1.5 mm is within the above-described numerical range, and the ideal value thereof is 1.0.

### INDUSTRIAL APPLICABILITY

According to the drill of the present invention, the wear resistance can be improved, and thus the life of the tool can be extended. Therefore, the present invention has industrial applicability.

### REFERENCE SIGNS LIST

1 Body
3 Tip surface
4 Chip discharging flute
5 Rake face
6 Flank face
7 Cutting edge
8 Outer peripheral surface
9 Shoulder portion
10 Drill
12 Leading edge
13 Margin
15 Outer peripheral corner
70 Thinning edge
71 Main cutting edge
72 First cutting edge
73 Second cutting edge
74 Apex portion
101 First surface
102 Second surface
H Honing
h1 First end portion
h2 Second end portion
L1 First width dimension
L2 Second width dimension
L1/L2 Width ratio
O Center axis
P Intersection
T Drill rotation direction

## Claims

1. A drill comprising:
a body extending in an axial direction along a center axis,
wherein the body includes
a chip discharging flute open to a tip surface and an outer peripheral surface of the body and extending from the tip surface to a posterior end side,
a rake face disposed in the chip discharging flute and facing a drill rotation direction about the center axis,
a flank face disposed on the tip surface,
a cutting edge disposed at a ridge portion at which the rake face and the flank face are connected to each other,
a margin disposed on the outer peripheral surface and extending along the chip discharging flute,
a leading edge disposed at a ridge portion at which the margin and the rake face are connected to each other, and
an outer peripheral corner disposed at a corner portion in which the cutting edge and the leading edge are connected to each other,
the cutting edge includes
a thinning edge disposed at a radially inner end portion of the cutting edge, and
a main cutting edge disposed on a radially outer side of the thinning edge and connected to the leading edge via the outer peripheral corner,
the thinning edge, the main cutting edge, and the leading edge each have honing of which a cross section perpendicular to each of the ridge portions has a convex curve shape,
in the cross section,
a surface connected to a first end portion of both end portions of the honing is defined as a first surface and a surface connected to a second end portion of both end portions is defined as a second surface,
a distance from an intersection between an extension line of the first surface and an extension line of the second surface to the first end portion is defined as a first width dimension L1, a distance from the intersection to the second end portion is defined as a second width dimension L2, and [L1/L2] is defined as a width ratio,
the thinning edge and the main cutting edge each have the first surface that is the rake face and the second surface that is the flank face, and
the width ratio of the thinning edge is larger than the width ratio of a radially outer end portion of the main cutting edge, the radially outer end portion being connected to the outer peripheral corner.

2. The drill according to Claim 1,
wherein the main cutting edge includes
a first cutting edge disposed on the radially outer side of the thinning edge and having a concave curve shape recessed in a direction opposite to the drill rotation direction about the center axis, and
a second cutting edge disposed on a radially outer side of the first cutting edge and connected to a radially outer end of the first cutting edge, and
the second cutting edge constitutes the radially outer end portion of the main cutting edge, the radially outer end portion being connected to the outer peripheral corner.

3. The drill according to Claim 1,
wherein the main cutting edge has a linear shape,
a drill blade diameter is defined as a diameter dimension of a rotation locus of the cutting edge about the center axis, and
a region of the main cutting edge within 7% of the drill blade diameter from the outer peripheral corner toward a radially inner side is defined as the radially outer end portion of the main cutting edge, the radially outer end portion being connected to the outer peripheral corner.

4. The drill according to any one of Claims 1 to 3,
wherein the leading edge has the first surface that is the rake face and the second surface that is the margin, and
the width ratio at a position within 1.5 mm from the outer peripheral corner toward the posterior end side in the leading edge is 0.7 or more and 1.3 or less.

5. The drill according to any one of Claims 1 to 3,
wherein the width ratio of a portion of the main cutting edge located on a radially inner side of the radially outer end portion is larger than the width ratio of the radially outer end portion of the main cutting edge.

6. The drill according to any one of Claims 1 to 3,
wherein the width ratio of the thinning edge increases as the thinning edge approaches the center axis in an edge length direction in which the thinning edge extends.

7. The drill according to any one of Claims 1 to 3,
wherein the width ratio of an outermost end of the main cutting edge located at the outer peripheral corner is the smallest among the width ratios of the cutting edge.

8. The drill according to Claim 2,
wherein the width ratio of the first cutting edge is maximized at a lowermost point located farthest in a direction opposite to the drill rotation direction in the first cutting edge.

9. The drill according to any one of Claims 1 to 3,
wherein the body has a shoulder portion disposed at a ridge portion at which the margin and the flank face are connected to each other and extending from the outer peripheral corner in a direction opposite to the drill rotation direction about the center axis, and the shoulder portion has honing of which a cross section perpendicular to the ridge portion has a convex curve shape, and
the shoulder portion has the first surface that is the flank face and the second surface that is the margin, and the width ratio of the shoulder portion is 0.7 or more and 1.3 or less.

10. The drill according to any one of Claims 1 to 3,
wherein the width ratio of the thinning edge is 1.0 or more.
